# EUROPÄISCHE PATENTSCHRIFT

(11) **EP 0 603 463 B1**
(45) Veröffentlichungstag und Bekanntmachung des Hinweises auf die Patenterteilung: **01.07.1998**
(21) Anmeldenummer: 93113035.5
(22) Anmeldetag: 13.08.1993
(51) Int. Cl.: C08J 7/12, C08J 7/16, C08J 9/36, B32B 27/08, B32B 27/32, B32B 5/18, B01D 67/00, B01D 71/82, B01D 71/32, B01D 71/34, B01D 71/36

(54) **Permanente hydrophile Modifizierung für Fluorpolymere und Verfahren zur Erzeugung der Modifizierung**
Permanent hydrophilic modification for fluoropolymers and process for producing this modification
Modification hydrophile permanente pour polymères de fluor et procédé pour produire cette modification

(30) Priorität: 23.12.1992 DE 4243995
(43) Veröffentlichungstag der Anmeldung: 29.06.1994
(73) Patentinhaber: W.L. GORE & ASSOCIATES, 85640 Putzbrunn (DE)
(72) Erfinder: Bürger, Wolfgang, Dr., D-81825 München (DE); Lunkwitz, Klaus, Dr., D-01187 Dresden (DE); Buchhammer, Heide-Marie, Dr., D-01237 Dresden (DE)
(74) Vertreter: Kador & Partner

(56) Entgegenhaltungen:
- EP-A- 0 408 378
- DATABASE WPIL, Nr. 87-89 924, DERWENT PUBLICATIONS LTD., London; & JP-A-62 039636 (MITSUBISHI RAYON K.K.)
- Römpp Chemie Lexikon, 9. Aufl., 1989-92, Georg Thieme Verlag, S. 2041, 2897-8, 3513, 3526, 3540

## Beschreibung

Die Erfindung betrifft ein permanent hydrophil modifiziertes Fluorpolymer sowie ein Verfahren zur Herstellung dieses Fluorpolymers.

Fluorpolymere finden aufgrund ihrer ausgezeichneten chemischen und thermischen Stabilität in vielen Bereichen der Technik Verwendung. Fluorpolymere besitzen jedoch eine hydrophobe Oberfläche, was sich bei bestimmten Anwendungsgebieten, beispielsweise in der Flüssigfiltration, als nachteilig erwiesen hat. Reine Fluorpolymere können so zur Stofftrennung disperser Partikel in Wasser nicht eingesetzt werden, da sie mit Wasser nicht benetzbar sind. Um sie trotzdem zur Stofftrennung aus wäßrigen Medien einzusetzen, wurden eine Reihe von Methoden entwickelt, welche die Oberfläche des Fluorpolymers mit Wasser benetzbar machen, d.h. hydrophil gestalten.

Zahlreiche Vorschläge wurden gemacht, um einer Fluorpolymer-Oberfläche Hydrophilie zu verleihen. Beispielsweise wurden Fluorpolymermembranen mit wäßrigen Alkohol- oder Ketonlösungen benetzt. Hier bleibt die Hydrophilie nur im feuchten Zustand erhalten, d.h. eine dauerhafte Hydrophilierung wird nicht erzielt. Gemäß den US-PSen 4,552,374 und 4,839,296 wird die Fluorpolymermembran mit einer Mischung aus Lösungsmittel und Tensid imprägniert. Gemäß der EP 175 322 wird eine Membran mit einem hydrophilen Propylenglycolmonofettsäureester imprägniert. Diese Behandlungsmethoden weisen den Nachteil auf, daß das Tensid, insbesondere bei erhöhten Temperaturen, während des Einsatzes der Membran herausgewaschen wird. Aus den US-PSen 4,298,002 und 4,908,236 ist weiters bekannt, eine mikroporöse Fluorpolymermembran mit einem hydrophilen Monomer zu imprägnieren und anschließend zu polymerisieren. Auch die US-PSen 4,113,912, 4,917,773, 4,618,533 und 4,506,035 beschreiben das Imprägnieren der Fluorpolymermembran mit einem hydrophilen Monomeren. Anschließend wird zur Fixierung Graft-Polymerisation, Vernetzung, Plasmabehandlung bzw. Behandlung mit energiereicher Strahlung durchgeführt. Es hat sich gezeigt, daß diese Methoden zu einer ungleichmäßigen Ausrüstung der Membran führen sowie zu einer ungleichmäßigen Vernetzung. Des weiteren besteht die Gefahr, daß die Poren einer Fluopolymermembran verstopfen können. In "Polymer Preprints 31 (1990) 1, M.S. Shoichet, T.J. McCarthy, der US-PS 3,390,067 und der EP 245 000 wird die chemische Vorbehandlung der Fluorpolymeroberfläche mit reduzierenden Reagenzien und anschließender Pfropfpolymerisation beschrieben. In J.Appl. Polym. Sci., 26 (1990) 2637, E.-S.A. Hegazy, N.H. Taher, A.R. Ebaid, JP-A-62-39 636 und in der US-PS 4,734,112 wird die Vorbehandlung einer Fluorpolymermembran mit Plasma, Laser oder durch Glimmentladung beschrieben. Anschließend erfolgt eine chemische Umsetzung mit einer hydrophilen Substanz. Diese Methoden führen zur Minderung der mechanischen Stabilität der Membran und zur ungleichmäßigen Modifizierung oberflächennaher Bereiche. Aus der EP 407,900 und EP 456,939 ist die Modifizierung einer Fluorpolymermembran mit einem hydrophilen Polymeren und anschließender chemischer Umsetzung der hydrophilen Gruppen bekannt. Diese Methode weist den Nachteil auf, daß die Membran eine verminderte Lösungsmittelstabilität aufweist und ein Verlust der Hydrophilie bei erhöhten Temperaturen auftritt, der durch Umorientierungseffekte und thermische Instabilität der funktionellen Gruppen hervorgerufen wird. Gemäß der EP 408 378 und der US 4,113,912 wird eine Fluopolymermembran dadurch hydrophiliert, daß sie mit einem hydrophilen Polymeren behandelt wird und anschließend dieses hydrophile Polymer mit einem Komplexbildner komplexiert wird. Derart hergestellte hydrophilierte Membranen weisen zwar eine stabilisierte Modifizierung auf, die Bindung der hydrophilen Komponenten ist jedoch ungenügend und die Gefahr der Inaktivierung durch Verlust der Ausrüstung ist gegeben. Aus der EP 436 720 ist der Einsatz von Polyelektrolyten, bestehend aus polykationischen und polyanionischen Verbindungen bekannt, welche bestimmten Substraten Hydrophilie verleihen können. Es hat sich jedoch gezeigt, daß diese Komplexe auf Fluorpolymermembranen völlig unzureichend haften. Polyelektrotolykomplexe sind weiter aus den DD-Psen 280 257 und 280 258 bekannt, die eine kationische Modifizierung von Substraten bewirken können. Auch hier ist die Haftung ungenügend.

Gemäß DATABASE WPIL, Nr. 87-89 924, DERWENT PUBLICATIONS LTD., London und JP-A-62-39 636 MITSUBISHI RAYON K.K. werden Fluorpolymere einer Plasmabehandlung unterworfen und danach mit Polyäthylenimin behandelt, wodurch eine kationische Oberflächenladung entsteht. Eine permanent hydrophile Modifizierung kann auf diese Weise nicht erreicht werden.

Zusammenfassend ist demnach festzustellen, daß es im Stand der Technik keine permanent hydrophile Modifizierung für Fluorpolymere gibt, die ausreichende Hydrophilie, chemische Resistenz, mechanische Festigkeit, Wasserpermeabilität und Dauerhaftigkeit aufweist.

Aufgabe der vorliegenden Erfindung ist es, ein permanent hydrophil modifiziertes Fluorpolymer, insbesondere eine Fluorpolymermembran zur Verfügung zu stellen, das eine erhöhte Permanenz aufweist und wobei gleichzeitig die gewöhnlich guten Eigenschaften, wie chemische Resistenz und mechanische Festigkeit, der Fluorpolymeren erhalten bleibt.

Gegenstand der vorliegenden Erfindung ist ein permanent hydrophil modifiziertes Fluorpolymer, das sich dadurch auszeichnet, daß das Fluorpolymer auf seiner Oberfläche einen Film aus einem geladenen Polyelektrolytkomplex aus einem Polykation und einem Polyanion aufweist, der eine anionische Überschußladung trägt. Bevorzugte Ausführungsformen der Modifizierung ergeben sich aus den Unteransprüchen. Gegenstand der Erfindung ist auch ein Verfahren zur Erzeugung eines permanent hydrophil modifizierten Fluorpolymers, wobei eine erste Schicht eines Polykations und eine zweite Schicht eines Polyanions auf die Oberfläche des Fluorpolymeren aufgebracht wird und ein geladener Polyelektrolytkomplex ausgebildet wird, wobei durch einen Überschuß des Polyanions eine anionische Überschußladung erhalten wird. Bevorzugte Ausführungsformen ergeben sich wieder aus den Unteransprüchen.

Die Vorteile des erfindungsgemäßen Fluorpolymers liegen einerseits in dem einfachen Verfahren zu seiner Herstellung, z.B. benötigt man lediglich wäßrige oder wäßrig-alkoholische Ausgangslösungen, die frei von weiteren organischen Lösungsmitteln sind, sowie andererseits in seiner guten Permeabilität, thermischen Beständigkeit, Dauerhaftigkeit und geringen Einsatzmengen und Applikationsmöglichkeiten für die unterschiedlichsten Fluorpolymere mit negativem Zeta-Potential. Das Verfahren kann für die Modifikation einer Vielzahl von Fluorpolymeren mit negativem Zeta-Potential eingesetzt werden. In Folge der Komplexstabilität ist ein Ablösen der Schicht auf ein Minimum reduziert. Bereits eine Monoschicht des Komplexes erzielt eine optimale Modifizierung, da der Aufzug des Polyions auf das Substrat abhängig ist von der Art und Anzahl funktioneller Gruppen und damit vom resultierenden Zeta-Potential. Dies bedeutet beispielsweise, daß auch extrem kleinporige Fluorpolymermembranen ausreichend hydrophiliert werden können, ohne daß die Porenstruktur verschlossen wird.

Das erfindungsgemäße Fluorpolymer besteht einmal aus einem Polykation, das in geringer Konzentration die zumeist ein negatives Zeta-Potential aufweisende Oberfläche des Fluorpolymers überzieht und dem Substrat ein positives Zeta-Potential verleiht. Die zweite und zur Verbesserung der hydrophilen Eigenschaften im wesentlichen verantwortlich zeichnenden Komponente ist ein polymeres anionaktives Molekül, vorzugsweise ein Polyanion mit aliphatischen oder aliphatisch/aromatischen Seitenketten. Das erfindungsgemäße Fluorpolymer ist also so aufgebaut, daß sich ein hydrophiles Polykation und/oder ein polykationisch funktionalisiertes Kunstharz auf der Oberfläche des Fluorpolymers befindet und adsorptive Kräfte (physikalische oder elektrostatische Adsorption) die Verbindung zwischen dem Substrat und dem Polykation herstellen. Der Polyelektrolytfilm weist Überschußladungen auf, die dem behandelten Polymer ein positives Zeta-Potential verleihen und zur Reaktion mit zusätzlichen Komponenten befähigen. Diese Reaktionsmöglichkeit wird zur Komplexbildung mit gelösten Polyanionen oder Kunstharzen im Folgeschritt genutzt.

Die Modifizierung der Fluorpolymere erfolgt gezielt mit solchen Komponenten, die einen hohen Ordnungszustand der hydrophilen Gruppen auf der Oberfläche ausprägen und dem Substrat hydrophile Eigenschaften verleihen. Eine gezielte Komplexbildung in Kombination mit einer thermischen Nachfixierung verleiht der Modifizierung die gewünschte Permanenz und dient der Um- oder Neuorientierung der äußersten hydrophilen Komponente, die Überschußladungen aufweist, und geeignet ist, z.B. mit Wassermolekülen über Wasserstoffbrückenbildung einen Film auszubilden oder mit anderen polaren Komponenten Wechselwirkungen einzugehen. Die Fixierung des geladenen Komplexes auf ursprünglich hydrophoben Fluropolymeren dient zur Anreicherung, Fixierung und Bindung anderer Substrate an der Oberfläche. Art und Anzahl der ionogenen oberflächenaktiven Gruppen sind variierbar.

Durch eine Auswahl geeigneter und strukturierter Polykationen erfolgt eine permanente Umladung der Polymeroberfläche, und durch eine Reaktion mit Polyanionen oder polyanionaktiven Kunstharzen und nachfolgende Fixierung erhält man einen stabilen Ordnungszustand, der Überschußladung basierend auf der Existenz freier ionogener Gruppen aufweist, und welcher die permanenten Hydrophilieeffekte bewirkt. Koordinative Moleküleffekte begünstigen den Orientierungseffekt.

Durch diese Art der Beschichtung erhält man permanente Modifizierungen bei minimalem Auftrag der Komponenten.

Bevorzugt sind Monoschichten bzw. begrenzte Multischichten. Je nach gewählter Modifizierungsvariante können besonders permanent hydrophile Wirkungen erzielt werden.

Es ist für die Herstellung und Anwendung der erfindungsgemäßen Modifizierung von Vorteil, daß das Substrat vorbehandelt wird und frei von Ausrüstungsmitteln, löslichen Rückständen des Verarbeitungsprozesses und Verunreinigungen vorliegt.

Es erweist sich von Vorteil, solche Fluorpolymere einzusetzen, die durch den Einbau funktioneller carboxylgruppenhaltiger Endgruppen, wie sie im Patent DE 41 17 281 beschrieben werden, ein negativeres Zeta-Potential im Vergleich zu reinen Fluorpolymeren aufweisen. Die Erfindung beschränkt sich nicht auf die Anwendung auf ein bestimmtes Fluorcarbonpolymer als Ausgangsmaterial. Eingesetzt werden können Polytetrafluorethylen, Copolymere des Tetrafluorethylens mit Perfluorvinylethern, Hexafluorpropylen, Monochlortrifluorethylen oder Ethylen, Polyvinylfluorid oder Polyvinylidenfluorid. Des weiteren können Compounds, d.h. gefüllte Fluorpolymere eingesetzt werden. Als Füllstoffe kommen Glaspulver, Glasfaser, Silikate, Graphit, Farbpigmente, Metallpulver u.a. in Betracht, die ebenfalls der Membran ein resultierendes negativeres Zeta-Potential verleihen können.

Im Ergebnis der Polykationmodifizierung wird im ersten Schritt dann sowohl das Polymer als auch der Füllstoff an der Oberfläche umgeladen.

Von besonderem Vorteil ist die Modifizierung für Membranen, die dann sowohl auf der inneren als auch der äußeren Oberfläche hydrophiliert sind. Besonders günstige Fluorpolymermembranen stellen uni- oder biaxial gereckte Polytetrafluorethlyenmembranen dar, die eine Porengröße von 0,01 bis 15 µm aufweisen. Diese Membranen weisen eine symmetrische oder asymmetrische Struktur der Porengrößenverteilung auf und eine Porosität von 40-95%. Die Membranen weisen einen MVTR-Wert (moisture vapor transport value) von 30000-70000 g/m²/Tag auf.

Die Ausbildung der porösen Struktur der Membran ist nicht auf eine bestimmte Technologie begrenzt. Porenbildende Methoden können Reckung, Extraktion einer Zweitkomponente, Herauslösen einer Komponente, Anwendung der Kernspurtechnik und Porenbildung durch Blasenbildung umfassen.

Das wasserlösliche Polykation muß in kürzester Zeit die gesamte Oberläche des Substrats bedecken, bei Membranen auch die innere Porenoberfläche, das Substrat umladen (positives Zeta-Potential) und demzufolge eine positive Überschußladung des Substrats initiieren, wobei gegebenenfalls eine thermische Fixierung von Vorteil ist. Dieses geladene Substrat muß genügend freie und leicht zugängliche reaktive Gruppen aufweisen, die in der Lage sind, einen stabilen Komplex mit Polyanionen und geeigneten Kunststoffharzen zu bilden. Diese funktionellen Verbindungen müssen in der Lage sein, durch Vororientierung im Molekül und während der Komplexbildung sowie durch einen sich anschließenden Fixierungsprozeß einen hohen Ordnungszustand an der Oberfläche auszubilden und eine Überschußladung aufweisen. Diese Orientierung kann auch durch Anwendung der Langmuir-Blodgett-Technik auf hydrophobe Polymeroberlächen erzielt werden. Im Ergebnis der Modifizierung des Polymers liegt eine veränderte hydrophilere Oberfläche mit einem erhöhten Anteil ionogener Gruppen im Vergleich zum Ausgangspolymer vor. Das bedeutet, man hat einen Überschuß an Polyanionen einzusetzen, wobei ein Teil der anionischen Gruppen zur irreversiblen Komplexbildung mit dem kationisch modifizierten Polymer, der größere Teil der anionischen Gruppen aber zur Ausprägung der hydrophilen Eigenschaften benötigt wird.

Bevorzugte Modifizierung mit mindestens einer Monoschicht des Komplexes sind erhältlich, indem man
a) das Polykation auf der Substratoberfläche adsorbiert und die Schicht mit mindestens eine, vorzugsweise zwei, polyfunktionelle Verbindung(en), enthaltenden Kunststoffharzen komplexiert, wobei mindestens eine der polyfunktionellen Verbindungen ionische bzw. Dipolgruppen enthält und nach der Fixierung Überschußladungen aufweist, oder
b) das Polykation auf der Substratoberfläche adsorbiert und die Schicht mit mindestens einem Polyanion komplexiert, das nach der Fixierung Überschußladungen aufweist,
c) ein kationisch modifiziertes hydrophiles Kunststoffharz auf der inneren und äußeren Substratoberfläche adsorbiert und die Schicht mit mindestens einem Polyanion komplexiert wird, das nach der Fixierung überschußladungen aufweist.

Eine besonders bevorzugte Variante stellt das Verfahren nach b) dar.

Bevorzugte Polykationen sind: quaternisierte Polyacrylamide, Polyvinylpyrrolidone, Polyvinylamine, Polyallylamine, Polyethylenimine, Polyvinylpyridin, NAFION mit quaternisierten Endgruppen, Polydimethyldiallylammoniumchlorid und ionogene synthetische und natürliche Polymere mit quaternisierten stickstoffhaltigen Endgruppen.

Bevorzugte Polyanionen sind: Polyethylensulfonat, Polystyrensulfonat, perfluorierte Ionomere. Sie werden vorzugsweise in Form ihrer Alkalisalze eingesetzt.

Bevorzugte Komplexe bestehen aus Polyallylamin-Polystyrensulfonat, Polyallylamin-Polyacrylsäure, Polyvinylamin-Polystyrensulfonat, Polyvinylamin-Polyacrylsäure sowie Polyethylenimin-Polyacrylsäure und Polyethylenimin-Polystyrensulfonat. Weitere Verbindungen, die neben dem Polykation eingesetzt werden können, sind:
- Dispersionen mit Polyvinylalkohol, Acrylaten, Ethylen-methacrylsäure-copolymere, Ethylen-methacrylsäure-Vinylactetat-copolymere
- Copolymere des Maleinsäureanhydrids
- Polyacryl(methacryl)säure bzw. -copolymere

Polyfunktionelle Verbindungen, die mit dem Polykation chemische Bindungen eingehen können, sind weiterhin Verbindungen, die additionsfähige Mehrfachbindungen aufweisen, Epoxidgruppen, Aldehydgruppen, Isocyanatgruppen, ferner Säureanhydridgruppen und Acylhalogenidgruppen.

Wasser ist das bevorzugte Lösungsmittel für die Polyelektrolyte, obwohl andere Lösungsmittel wie z.B. niedere Alkohole allein oder in Kombination mit Wasser verwendet werden können. Je nach Art der eingesetzten Polyelektrolyte (Molmasse, Ladungsdichte, Art der funktionellen Gruppen) und den Reaktionsbedingungen (Temperatur, pH-Wert, Reaktionszeit) kann so für jedes Substrat eine optimale Endgruppenaktivität und Bedeckung der Oberfläche erzielt werden.

Die Reaktionszeit variiert zwischen 10 s und 1 h. Über den pH-Wert kann die Reaktivität der funktionellen Gruppen beeinflußt werden; optimale Werte für die Komplexbildung liegen zwischen pH 4 und pH 8. Nach der Adsorption des Polyelektrolyten an das Substrat - ein ausreichender Zeitraum bis zur Ausbildung einer gleichmäßigen Schicht auf und an der Oberfläche des Substrates muß gewährleistet sein - wird der Vorgang wiederholt oder bei ausreichender Bedeckung überschüssiges Polykation durch Abquetschen bzw. durch Wasserbehandlung entfernt. Die Komplexbildung erfolgt wiederum aus wäßriger/alkoholischer Lösung, wobei:
a) Polykationen, z.B. aus 0,01 bis 30%igen wäßrigen Lösungen appliziert werden. Vorzugsweise enthalten diese Lösungen 0,1 bis 20% Polykation.
b) modifizierte Kunststoffharze, z.B. aus 0,1 bis 50%igen wäßrigen Lösungen/Dispersionen eingesetzt werden. Vorzugsweise enthalten diese Lösungen 5 bis 60 Gramm Kunststoffharz auf 1000 ml Wasser.
c) Polyanionen, z.B. aus 0,01 bis 30%igen wäßrigen Lösungen appliziert werden. Vorzugsweise enthalten diese Lösungen 0,02 bis 20% Polyanion.

Die Komplexmodifizierung wird bei Temperaturen im Bereich von 10 - 80 °C durchgeführt, insbesondere im Bereich zwischen 40 und 60°C. Die Umsetzung kann ein- oder zweistufig erfolgen. Einstufig bedeutet, daß der Polyelektrolyt oder das kationische Kunststoffharz und das Polyanion in einem Bad angewendet werden. Das trifft besonders im Fall b, d.h. bei Einsatz eines Kunststoffharzes zu. Ein zweistufiges Verfahren ist zu bevorzugen. Durch eine schrittweise Behandlung des Substrates in separaten Reaktionslösungen wird eine unkontrollierte Komplexbildung in Lösung ausgeschlossen und so eine optimal Hydrophilmodifizierung bei geringen Ausgangskonzentrationen der Reaktionslösungen erreicht. Günstig erweist sich eine Vorbehandlung des Polymeren in einer wäßrig-alkoholischen Polykationlösung. Nach der Modifizierung des Fluoropolymeren schließt sich ein Fixierprozeß bei Temperaturen zwischen 110 und 180°C an. Die Fixierzeit ist substratabhängig und muß dem jeweiligen Polyelektrolytsystem angepaßt werden. Vorzugsweise arbeitet man zwischen 5 s und 15 min.

Nachstehend wird die Erfindung anhand von Beispielen näher erläutert.

### Zeta-Potential

Zur Messung des Zeta-Potentials wird das Elektrokinetische Meßsystem EKA der Firma PAAR genutzt. Die Auswertung erfolgt in erster Näherung nach der Methode von FAIRBROTHER / MASTIN.

### Flüssigkeitseintrittsdruck

Es wurde der Druck ermittelt, der notwendig war, Wasser in die Porenstruktur der getrockneten Membran zu treiben. Dazu wird der Druck der Testflüssigkeit langsam mit einem Druckgradienten von 10 mbar/s an der Unterseite der Membran erhöht.

### Kontaktwinkel

Die Kontaktwinkel der Membran gegen Wasser bei 17°C wurden mit einem Kontaktwinkelmeßgerät G1 der Firma KRÜSS bestimmt.

### Beispiel 1

Eine Membran aus expandiertem Polytetrafluorethylen (ePTFE) (2 µm Porendurchmesser, Zeta-Potential nach der Anströmmethode -17mV) wird mit i-Propanol benetzt und in eine 0,ln Lösung von Polyallylamin (PAA) gegeben. Nach 10 min bei einer Temperatur von 60°C nimmt man die Membran aus der Lösung, entfernt gegebenenfalls überschüssiges PAA mit Wasser oder durch Abquetschen und trocknet 30 min bei 130°C. Die Gewichtszunahme der Membran beträgt 1,5%, und man bestimmt ein Zeta-Potential nach der Anströmmethode von + 20mV. Diese Membran wird anschließend in eine wäßrig-alkoholische 10⁻¹n Lösung von Polyacrylsäure bei 60°C gegeben, nach 10 min herausgenommen, abgequetscht und 10 min bei 160°C getempert. Ergebnisse siehe Tabelle 1.

### Beispiel 2

Eine Membran aus expandiertem PTFE (2µm Porendurchmesser) wird mit i-Propanol benetzt und in eine 0,1 n Lösung von Polyallylamin (PAA) gegeben. Nach 10 min bei einer Temperatur von 60°C nimmt man die Membran aus der Lösung, entfernt gegebenenfalls überschüssiges PAA mit Wasser oder durch Abquetschen und trocknet 30 min bei 130°C. Die Gewichtszunahme der Membran beträgt 1,5%, und man bestimmt ein Zeta-Potential nach der Anströmmethode von + 20,1 mV.

Diese Membran wird anschließend in eine wäßrig-alkoholische 5 x 10⁻³ n Lösung des Natriumsalzes der Polystyrensulfonsäure bei 60°C gegeben, nach 10 min herausgenommen, abgequetscht und 10 min bei 160°C getempert. Ergebnisse siehe Tabelle 1.

### Beispiel 3

Eine Membran aus expandiertem PTFE (2µm Porendurchmesser) wird mit i-Propanol benetzt und in eine 0,1 n Lösung von Polyallylamin (PAA) gegeben. Nach 10 min bei einer Temperatur von 60°C nimmt man die Membran aus der Lösung, entfernt gegebenenfalls überschüssiges PAA mit Wasser oder durch Abquetschen und trocknet 30 min bei 130°C. Die Gewichtszunahme der Membran beträgt 1,3%. Diese Membran wird anschließend in eine wäßrig-alkoholische 1%ige Lösung von NAFION (Marke der E.I. duPont de Nemours and Company) bei 60°C gegeben, nach 10 min herausgenommen, abgequetscht und 10 min bei 160°C getempert. Ergebnisse siehe Tabelle 1.

### Beispiel 4

Eine Membran aus expandierten PTFE (2 µm Porendurchmesser) wird mit i-Propanol benetzt und in eine 0,1n Lösung von Polymin G100 (PEI) gegeben. Nach 10 min bei einer Temperatur von 60°C nimmt man die Membran aus der Lösung, entfernt gegebenenfalls überschüssiges Polymin mit Wasser oder durch Abquetschen und trocknet 30 min bei 130°C. Die Gewichtszunahme der Membran beträgt 1 %. Diese Membran wird anschließend in eine wäßrig-alkoholische 0,1n Lösung von Polyacrylsäure bei 60°C gegeben, nach 10 min herausgenommen, abgequetscht und 10 min bei 160°C getempert. Ergebnisse siehe Tabelle 1.

### Beispiel 5

Eine Membran aus expandiertem PTFE (1 µm Porendurchmesser) mit erhöhtem Anteil an Carboxylgruppen wird in einer Lösung von 100 Teilen i-Propanol und 50 Teilen einer 0,1n PAA-Lösung 10 min bei 60°C vorbehandelt und danach weitere 10 min bei 60°C in eine 0,1 n PAA-Lösung gegeben. Man entfernt überschüssiges PAA durch Abquetschen und trocknet 10 min bei 130°C. Danach gibt man die Membran 10 min bei einer Temperatur von 60°C in eine 0,1n wäßrig-alkoholische Polystyrensulfonatlösung und tempert 10 min bei 160°C. Die Gewichtszunahme der Membran beträgt 3,4%. Ergebnisse siehe Tabelle 1.

### Beispiel 6

Eine GORE TEX Membran (2 µm Porendurchmesser) wird in einer Lösung von 100 Teilen i-Propanol und 50 Teilen einer 0,1n PAA-Lösung 10 min bei 60°C vorbehandelt und danach weitere 10 min bei 60°C in eine 0,1n PAA-Lösung gegeben. Man entfernt überschüssiges PAA durch Abquetschen und gibt die Membran in eine 0,5n Polyacrylsäurelösung für 10 min bei 60°C. Danach tempert man die Membran bei 160°C für 10 min. Die Gewichtszunahme der Membran beträgt 7,5%. Ergebnisse siehe Tabelle 1.

### Beispiel 7

Eine GORE TEX Membran (2 µm Porendurchmesser) wird in einer Lösung von 100 Teilen i-Propanol und 50 Teilen einer 0,1n PAA-Lösung 10 min bei 60°C vorbehandelt und danach weitere 10 min bei 60°C in einer 0,1n PAA-Lösung gegeben. Man entfernt überschüssiges PAA durch Abquetschen, trocknet 10 min bei 130°C und gibt die Membran danach in eine 0,1n Polystyrensulfonatlösung für 10 min bei 60°C. Danach tempert man die Membran bei 160°C für 10 min. Die Gewichtszunahme der Membran beträgt 5,0%. Ergebnisse siehe Tabelle 1.

### Beispiel 8

Eine GORE TEX Membran mit erhöhtem Anteil an Carbonsäuregruppen (1 µm Porendurchmesser) wird in einer Lösung von 100 Teilen i-Propanol und 50 Teilen einer 0,1n PAA-Lösung 10 min bei 60°C vorbehandelt und danach weitere 10 min bei 60°C in eine 0,1n PAA-Lösung gegeben. Man entfernt überschüssiges PAA durch Abquetschen und gibt die Membran in eine 0,5n Polyacrylsäurelösung für 10 min bei 60°C. Danach tempert man die Membran bei 160°C für 10 min. Die Gewichtszunahme der Membran beträgt 6,5%. Ergebnisse siehe Tabelle 1.

### Beispiel 9

Eine GORE TEX Membran (2 µm Porendurchmesser) wird in einer Lösung von 100 Teilen i-Propanol und 50 Telen einer 0,1n Polyethylenimin-Lösung 10 min bei 60°C vorbehandelt und danach weitere 10 min bei 60°C in einer 0,1n PEI-Lösung gegeben. Man entfernt überschüssiges PEI durch Abquetschen und gibt die Membran in eine 0,5n Polyacrylsäurelösung für 10 min bei 60°C. Danach tempert man die Membran bei 160°C für 10 min. Die Gewichtszunahme der Membran beträgt 6,2%. Ergebnisse siehe Tabelle 1.

### Beispiel 10

Eine GORE TEX Membran mit erhöhtem Anteil an Carbonsäuregruppen (1 µm Porendurchmesser) wird in einer Lösung von 100 Teilen i-Propanol und 50 Teilen einer 0,1n PEI-Lösung 10 min bei 60°C vorbehandelt und danach weitere 10 min bei 60°C in einer 0,1n PEI-Lösung gegeben. Man entfernt überschüssiges PEI durch Abquetschen und gibt die Membran in eine 0,5n Polyacrylsäurelösung für 10 min bei 60°C. Danach tempert man die Membran bei 160°C für 10 min. Die Gewichtszunahme der Membran beträgt 6,4%. Ergebnisse siehe Tabelle 1.

### Untersuchung der Permanenz

### Beispiel 1

Eine GORE TEX Membran wird nach Beispiel 1 modifiziert. Statt des Tempervorganges trocknet man die Membran 30 min bei 110°C. Die Modifizierung läßt sich in Wasser problemlos herunterwaschen.

### Beispiel 2

Eine nach Beispiel 5 modifizierte Membran wird in 200 ml Wasser 30 min unter Rückflußbedingungen gekocht. Der Masseverlust ist < 0.05%.

**Tabelle 1**

| Bezeichnung | Vorbehandlung | Eintrittsdruck von Wasser in bar | Randwinkel gegen Wasser in Grad | MVTR in g/m²d | Porengröße in µm |
|---|---|---|---|---|---|
| GORE TEX (2µm) | | 0,64 | 130 | 72000 | 2 |
| GORE TEX (1µm) | | 1,60 | 121 | 64000 | 1 |
| carboxyliert Beispiel 1 | 30min/130°C¹ | 0,43 | 122 | 73000 | 2 |
| Beispiel 2 | 30min/130°C¹ | 0,44 | 123 | 64000 | 2 |
| Beispiel 3 | 30min/130°C¹ | 0,50 | 126 | 48000 | 2 |
| Beispiel 4 | 30min/130°C¹ | 0,39 | 103 | 43000 | 2 |
| Beispiel 5 | ja² 10min 130°C¹ | 0,79 | 107 | 57000 | 1 |
| Beispiel 6 | ja² | 0,39 | 91 | 43000 | 2 |
| Beispiel 7 | ja² 10min 130°C¹ | 0,45 | 95 | 48000 | 2 |
| Beispiel 8 | ja² | 1,20 | 101 | 38000 | 1 |
| Beispiel 9 | ja² | 0,28 | 107 | 47000 | 2 |
| Beispiel 10 | ja² | 1,11 | 62 | 47000 | 1 |

| | | | | | |
|---|---|---|---|---|---|
| 1 Temperatur und Zeit der thermischen Fixierung der Polykationkomponente | | | | | |
| 2 Vorbehandlung in verdünnter wäßriger-alkoholischer Polykationlösung | | | | | |

## Patentansprüche

1. Permanent hydrophil modifiziertes Fluorpolymer, dadurch gekennzeichnet, daß das Fluorpolymer auf seiner Oberfläche einen Film aus einem geladenen Polyelektrolytkomplex aus einem Polykation und einem Polyanion aufweist, der eine anionische Überschußladung trägt.

2. Permanent hydrophil modifiziertes Fluorpolymer nach Anspruch 1, dadurch gekennzeichnet, daß das Polykation ein polykationisches Kunstharz ist.

3. Permanent hydrophil modifiziertes Fluorpolymer nach Anspruch 1 oder 2, dadurch gekennzeichnet, daß das Polyanion ein anionisch modifiziertes Kunstharz ist.

4. Permanent hydrophil modifiziertes Fluorpolymer nach Anspruch 1, dadurch gekennzeichnet, daß das Polykation auf der Fluorpolymeroberfläche adsorbiert und mit einem Kunstharz, welches wenigstens eine polyfunktionelle anionische Verbindung enthält, komplexiert ist.

5. Permanent hydrophil modifiziertes Fluorpolymer nach Anspruch 4, dadurch gekennzeichnet, daß das Kunstharz zwei polyfunktionelle Verbindungen enthält.

6. Permanent hydrophil modifiziertes Fluorpolymer nach Anspruch 1, dadurch gekennzeichnet, daß das Polykation auf der Fluorpolymeroberfläche adsorbiert und mit mindestens einem Polyanion komplexiert ist.

7. Permanent hydrophil modifiziertes Fluorpolymer nach Anspruch 1, dadurch gekennzeichnet, daß ein kationisch modifiziertes hydrophiles Kunstharz auf der Fluorpolymeroberfläche adsorbiert und mit einem Polyanion komplexiert ist.

8. Permanent hydrophil modifiziertes Fluorpolymer nach einem der Ansprüche 1 bis 6, dadurch gekennzeichnet, daß das Polykation ausgewählt ist aus quaternisierten Polyacrylamiden, Polyvinylpyrrolidonen, Polyvinylaminen, Polyallylaminen, Polyethyleniminen, Polyvinylpyridin, perfluorierten Ionomeren mit quaternisierten Endgruppen, Polydimethyldiallylammoniumchlorid und ionogenen synthetischen und natürlichen Polymeren mit quaternisierten stickstoffhaltigen Endgruppen.

9. Permanent hydrophil modifiziertes Fluorpolymer nach wenigstens einem der Ansprüche 1 bis 7, dadurch gekennzeichnet, daß das Polyanion ausgewählt ist aus Polyethylensulfonat, Polystyrensulfonat, perfluorierten Ionomeren.

10. Permanent hydrophil modifiziertes Fluorpolymer nach Anspruch 9, dadurch gekennzeichnet, daß die Polyanionen als Alkalisalze vorliegen.

11. Permanent hydrophil modifiziertes Fluorpolymer nach Anspruch 1, dadurch gekennzeichnet, daß ein Polyallylamin-Polystyrensulfonat-Komplex vorliegt.

12. Permanent hydrophil modifiziertes Fluorpolymer nach Anspruch 1, dadurch gekennzeichnet, daß ein Polyallylamin-Polyacrylsäurekomplex vorliegt.

13. Permanent hydrophil modifiziertes Fluorpolymer nach Anspruch 1, dadurch gekennzeichnet, daß ein Polyvinylamin-Polystyrensulfonat-Komplex vorliegt.

14. Permanent hydrophil modifiziertes Fluorpolymer nach Anspruch 1, dadurch gekennzeichnet, daß ein Polyvinylamin-Polyacrylsäure-Komplex vorliegt.

15. Permanent hydrophil modifiziertes Fluorpolymer nach Anspruch 1, dadurch gekennzeichnet, daß ein Polyethylenimin-Polyacrylsäure-Komplex vorliegt.

16. Permanent hydrophil modifiziertes Fluorpolymer nach Anspruch 1, dadurch gekennzeichnet, daß ein Polyethylenimin-Polystyrensulfonat-Komplex vorliegt.

17. Permanent hydrophil modifiziertes Fluorpolymer nach wenigstens einem der Ansprüche 1 bis 16, dadurch gekennzeichnet, daß das Fluorpolymer Polytetrafluorethylen (PTFE) ist.

18. Permanent hydrophil modifiziertes Fluorpolymer nach wenigstens einem der Ansprüch 1 bis 17, dadurch gekennzeichnet, daß das Fluorpolymer in Form eines Compounds vorliegt.

19. Permanent hydrophil modifiziertes Fluorpolymer nach wenigstens einem der Ansprüche 1 bis 18, dadurch gekennzeichnet, daß das Fluorpolymer Membranstruktur aufweist.

20. Permanent hydrophil modifiziertes Fluorpolymer nach nach einem der Ansprüche 1 bis 19, dadurch gekennzeichnet, daß der Film aus geladenem Polyelektrolytkomplex eine erste Schicht eines Polykations und eine zweite Schicht eines Polyanions aufweist.

21. Verfahren zur Erzeugung eines permanent hydrophil modifizierten Fluorpolymers, wobei eine erste Schicht eines Polykations und eine zweite Schicht eines Polyanions auf die Oberfläche des Fluorpolymeren aufgebracht wird und ein geladener Polyelektrolytkomplex ausgebildet wird, wobei durch einen Überschuß des Polyanions eine anionische Überschußladung erhalten wird.

22. Verfahren nach Anspruch 21, dadurch gekennzeichnet, daß in wäßriger oder wäßrigalkoholischer Lösung gearbeitet wird.

23. Verfahren nach Anspruch 22, **dadurch gekennzeichnet**, daß der pH-Wert der Lösung zwischen 4 und 8 eingestellt wird.

## Claims

1. A permanently hydrophilically modified fluoropolymer, characterized in that the fluoropolymer has on the surface thereof a film of a charged polyelectrolyte complex of a polycation and a polyanion carrying an anionic excess charge.

2. The permanently hydrophilically modified fluoropolymer of claim 1, characterized in that the polycation is a polycationic artificial resin.

3. The permanently hydrophilically modified fluoropolymer of claim 1 or 2, characterized in that the polyanion is an anionically modified artificial resin.

4. The permanently hydrophilically modified fluoropolymer of claim 1, characterized in that the polycation is adsorbed on the fluoropolymer surface and complexed with an artificial resin containing at least one polyfunctional anionic compound.

5. The permanently hydrophilically modified fluoropolymer of claim 4, characterized in that the artificial resin contains two polyfunctional compounds.

6. The permanently hydrophilically modified fluoropolymer of claim 1, characterized in that the polycation is adsorbed on the fluoropolymer surface and complexed with at least one polyanion.

7. The permanently hydrophilically modified fluoropolymer of claim 1, characterized in that a cationically modified hydrophilic artificial resin is adsorbed on the fluoropolymer surface and complexed with a polyanion.

8. The permanently hydrophilically modified fluoropolymer of any of claims 1 to 6, characterized in that the polycation is selected from quatemized polyacrylamides, polyvinylpyrrolidones, polyvinylamines, polyallylamines, polyethylene imines, polyvinylpyridine, perfluorinated ionomers with quatemized end groups, polydimethyldiallyl ammonium chloride and ionogenic synthetic and natural polymers with quatemized nitrogenous end groups.

9. The permanently hydrophilically modified fluoropolymer of at least one of claims 1 to 7, characterized in that the polyanion is selected from polyethylene sulfonate, polystyrene sulfonate, perfluorinated ionomers.

10. The permanently hydrophilically modified fluoropolymer of claim 9, characterized in that the polyanions are present as alkali salts.

11. The permanently hydrophilically modified fluoropolymer of claim 1, characterized in that a polyallylamine-polystyrene sulfonate complex is present.

12. The permanently hydrophilically modified fluoropolymer of claim 1, characterized in that a polyallylamine-polyacrylic acid complex is present.

13. The permanently hydrophilically modified fluoropolymer of claim 1, characterized in that a polyvinylamine-polystyrene sulfonate complex is present.

14. The permanently hydrophilically modified fluoropolymer of claim 1, characterized in that a polyvinylamine-polyacrylic acid complex is present.

15. The permanently hydrophilically modified fluoropolymer of claim 1, characterized in that a polyethylene imine-polyacrylic acid complex is present.

16. The permanently hydrophilically modified fluoropolymer of claim 1, characterized in that a polyethylene imine-polystyrene sulfonate complex is present.

17. The permanently hydrophilically modified fluoropolymer of at least one of claims 1 to 16, characterized in that the fluoropolymer is polytetrafluoroethylene (PTFE).

18. The permanently hydrophilically modified fluoropolymer of at least one of claims 1 to 17, characterized in that the fluoropolymer is present in the form of a compound.

19. The permanently hydrophilically modified fluoropolymer of at least one of claims 1 to 18, characterized in that the fluoropolymer has a membrane structure.

20. The permanently hydrophilically modified fluoropolymer of any of claims 1 to 19, characterized in that the film of charged polyelectrolyte complex has a first layer of a polycation and a second layer of a polyanion.

21. A process for producing a permanently hydrophilically modified fluoropolymer wherein a first layer of a polycation and a second layer of a polyanion are applied to the surface of the fluoropolymer and a charged polyelectrolyte complex is formed, an excess of the polyanion causing an anionic excess charge to be obtained.

22. The process of claim 21, characterized in that one works in aqueous or aqueous-alcoholic solution.

23. The process of claim 22, characterized in that the pH value of the solution is adjusted between 4 and 8.

## Revendications

1. Polymère fluoré à modification hydrophile permanente, caractérisé en ce que le polymère fluoré présente à sa surface un film en complexe de polyélectrolyte chargé obtenu à partir d'un polycation et d'un polyanion, qui porte un excédent de charges anioniques.

2. Polymère fluoré à modification hydrophile permanente selon la revendication 1, caractérisé en ce que le polycation est une résine polycationique.

3. Polymère fluoré à modification hydrophile permanente selon la revendication 1 ou 2, caractérisé en ce que le polyanion est une résine anionique modifiée.

4. Polymère fluoré à modification hydrophile permanente selon la revendication 1, caractérisé en ce que le polycation est adsorbé à la surface du polymère fluoré et est complexé avec une résine, qui contient au moins un composé anionique polyfonctionnel.

5. Polymère fluoré à modification hydrophile permanente selon la revendication 4, caractérisé en ce que la résine contient deux composés polyfonctionnels.

6. Polymère fluoré à modification hydrophile permanente selon la revendication 1, caractérisé en ce que le polycation est adsorbé à la surface du polymère fluoré et est complexé avec au moins un polyanion.

7. Polymère fluoré à modification hydrophile permanente selon la revendication 1, caractérisé en ce qu'une résine hydrophile cationique modifiée est adsorbée à la surface du polymère fluoré et est complexée avec un polyanion.

8. Polymère fluoré à modification hydrophile permanente selon l'une des revendications 1 à 6, caractérisé en ce que le polycation est choisi parmi les polyacrylamides quaternisés, les polyvinylpyrrolidones, les polyvinylamines, les polyallylamines, les polyéthylèneimines, les polyvinylpyridines, les ionomères perfluorés avec des groupes terminaux quaternisés, le chlorure de polydiméthyldiallylammonium et des polymères ionogènes synthétiques et naturels avec des groupes terminaux azotés quaternisés.

9. Polymère fluoré à modification hydrophile permanente selon au moins une des revendications I à 7, caractérisé en ce que le polyanion est choisi parmi le sulfonate de polyéthylène, le sulfonate de polystyrène, les ionomères perfluorés.

10. Polymère fluoré à modification hydrophile permanente selon la revendication 9, caractérisé en ce que les polyanions se présentent sous forme de sels alcalins.

11. Polymère fluoré à modification hydrophile permanente selon la revendication 1, caractérisé en ce qu'il se présente sous forme d'un complexe polyallylaminesulfonate de polystyrène.

12. Polymère fluoré à modification hydrophile permanente selon la revendication 1, caractérisé en ce qu'il se présente sous forme d'un complexe polyallylamine-acide polyacrylique.

13. Polymère fluoré à modification hydrophile permanente selon la revendication 1, caractérisé en ce qu'il se présente sous forme d'un complexe polyvinylamine-sulfonate de polystyrène.

14. Polymère fluoré à modification hydrophile permanente selon la revendication 1, caractérisé en ce qu'il se présente sous forme d'un complexe polyvinylamine-acide polyacrylique.

15. Polymère fluoré à modification hydrophile permanente selon la revendication 1, caractérisé en ce qu'il se présente sous forme d'un complexe polyéthylèneimine-acide polyacrylique.

16. Polymère fluoré à modification hydrophile permanente selon la revendication 1, caractérisé en ce qu'il se présente sous forme d'un complexe polyéthylèneimine-sulfonate de polystyrène.

17. Polymère fluoré à modification hydrophile permanente selon au moins une des revendications 1 à 16, caractérisé en ce que le polymère fluoré est le polytétrafluoroéthylène (PTFE).

18. Polymère fluoré à modification hydrophile permanente selon au moins une des revendications 1 à 17, caractérisé en ce que le polymère fluoré se trouve sous la forme d'un matériau composite.

19. Polymère fluoré à modification hydrophile permanente selon au moins une des revendications 1 à 18, caractérisé en ce que le polymère fluoré présente une structure de membrane.

20. Polymère fluoré à modification hydrophile permanente selon l'une des revendications 1 à 19, caractérisé en ce que le film en complexe de polyélectrolyte chargé présente une première couche en un polycation et une deuxième couche en un polyanion.

21. Procédé pour la production d'un polymère fluoré à modification hydrophile permanente, dans lequel on dépose à la surface du polymère fluoré une première couche en un polycation et une deuxième couche en un polyanion et on forme un complexe de polyélectrolyte chargé, dans lequel on obtient un excès de charges anioniques par l'intermédiaire d'un excès de polyanion.

22. Procédé selon la revendication 21, caractérisé en ce qu'on opère en solution aqueuse ou hydro-alcoolique.

23. Procédé selon la revendication 22, caractérisé en ce que la valeur du pH de la solution est ajustée entre 4 et 8.
